# EUROPÄISCHE PATENTANMELDUNG

(11) **EP 0 916 467 A2**
(43) Veröffentlichungstag der Anmeldung: **19.05.1999**
(21) Anmeldenummer: 98117701.7
(22) Anmeldetag: 18.09.1998
(51) Int. Cl.: B29C 45/14

(54) **Gehäuse mit durch Umspritzen eingesetztem Kunstoffteil**

(30) Priorität: 14.11.1997 DE 29720169 U
(71) Anmelder: ABB PATENT GmbH, 68309 Mannheim (DE)
(72) Erfinder: Koepernik, Jochen, Dr. Ing, 06369 Schortewitz (DE); Wiese, Michael, Dipl.-Ing, 42897 Remscheid (DE)
(74) Vertreter: Miller, Toivo

(57) **Zusammenfassung**

Die Erfindung bezieht sich auf ein Kunststoffgehäuse mit einer Gehäusewand (2), die wenigstens eine Öffnung (5) aufweist, in die ein folienartiges Kunststoffteil (1), insbesondere eine Fresnellinsenanordnung mittels Kunststoffumspritzen seines Randes (6) eingesetzt ist. Solche Anordnungen werden beispielsweise für Bewegungsmelder verwendet. Mit der Erfindung wird vorgeschlagen, den Rand (6) des Kunststoffteils (1) mit einer zum Gehäuseinneren weisenden Stufe (8) zu versehen. Die Randgestaltung ermöglicht einen wasserdichten und stufenlosen Übergang von einer Linsenanordnung zur Gehäusewand.

## Beschreibung

Die Erfindung bezieht sich auf ein Kunststoffgehäuse nach dem Oberbegriff des Schutzanspruchs 1.

Eine solche Anordnung ist aus dem Gebrauchsmuster G 91 13 638.5 bekannt, das sich auf ein folienartiges Bauteil zum Umspritzen bezieht, wobei das Bauteil für den Einsatz in eine Öffnung eines Kunststoffgehäuses vorgesehen ist.

Kunststoffgehäuse dieser Art werden für technische Geräte, wie z. B. Infrarot-Bewegungsmelder verwendet, welche unter anderem optische Funktionen, wie z. B. Empfang von Strahlung besitzen, wobei das Erfordernis besteht, die Strahlung zu fokussieren, zu filtern oder auch definiert abzuschirmen. Diesem Erfordernis wird durch dünnwandige, aus Polyethylen (PE) bestehende, flächenhafte Teile, wie z. B. PE-Fresnellinsen oder Folien, entsprochen, die an geeigneten Stellen im Kunststoffgehäuse angeordnet werden.

Solche PE-Teile können auf unterschiedliche Art und Weise im umgebenden Kunststoffgehäuse befestigt werden. Bekannt sind das mechanische Einsetzen oder Einklippen in Nuten, das Befestigen mittels separatem Spannrahmen und/oder mittels geräteinternem Käfig. Außerdem ist das Umspritzen der PE-Teile mit dem Gehäusekunststoff bekannt, das den Vorteil eines quasi-monilithischen Gehäuses ohne separate Einrichtungen zur Fixierung der PE-Linse hat.

Wesentlich für die Realisierung geforderter Gehäuseeigenschaften und die technische Machbarkeit des Umspritzvorganges ist die Randgestaltung des PE-Teiles.

Geforderte Gehäuseeigenschaften können sein: Wasserdichtigkeit, stufenloser Übergang der PE-Oberfläche in die Kunststoff-Oberfläche des umgebenden Gehäuses und Resistenz gegen externe Druckbelastung auf das PE-Teil.

Zu den Forderungen hinsichtlich der Durchführbarkeit des Umspritzens zählt, daß das in das Gehäuse einzusetzende Kunststoffteil eine ausreichende Formstabilität besitzt, um ein einseitiges Anlegen des in der Regel weichen PE-Randes in der Spritzgießform zu vermeiden. Der Rand des Kunststoffteils soll so ausgebildet sein, daß ein beidseitiges sicheres Umfließen möglich ist. Der zu umspritzende Rand soll ausreichend groß sein. Im Gebrauchsmuster G 91 13 638.5 ist ein folienartiges Bauteil mit einer Randgestaltung angegeben, die es ermöglicht, einen Teil der vorgenannten Anforderungen zu erfüllen. Das bekannte folienartige Bauteil hat einen flachen in eine Spritzgießform ragenden umlaufenden Rand, der abwechselnd Löcher und kegelartige Abstandsnoppen aufweist. Durch die Löcher entstehen Materialbrücken, die die Festigkeit sicherstellen. Die Noppen verhindern das einseitige Anlegen des flachen und damit biegsamen Randes in der Spritzgießform in dem Augenblick, in dem eine heiße Gehäusemasse eingespritzt wird.

Nachteilig ist jedoch, daß durch den flachen Bauteilrand, z. B. Linsenrand, nach dem beidseitigen Umspritzen eine Stufe im Gehäuse am Übergang zwischen Linse und Gehäuse entsteht. Eine solche Stufe oder Wulstbildung ist zumindest aus ästhetischen Gründen unerwünscht. Weiterhin kann die Wasserdichtigkeit mangelhaft sein, wenn der ins Gehäuse ragende Linsenrand klein gehalten werden muß, um z. B. Kollisionen des Linsenrandes mit anderen im Gehäuse angebrachten, der Linse dicht benachbarten Teile auszuschließen. In solchen Fällen liegen die Löcher sehr dicht am Übergang zwischen Linse und Gehäuse und könnten bei leicht variierenden Spritzparametern partiell freiliegen und Wasserbrücken bilden.

Der Erfindung liegt die Aufgabe zugrunde, ein Kunststoffgehäuse mit durch Umspritzen eingefügtem folienartigem Kunststoffteil anzugeben, das allen vorgenannten Anforderungen gerecht wird.

Diese Aufgabe wird bei einem Kunststoffgehäuse nach dem Oberbegriff des Anspruchs 1 durch dessen kennzeichnende Merkmale gelöst.

Vorteilhafte Ausgestaltungen sind in weiteren Ansprüchen angegeben.

Gemäß der Erfindung wird vorgeschlagen, den Rand des folienartigen Kunststoffteils als umlaufende Treppenstufe auszuführen. Mit einer solchen Randgestaltung werden eine hohe Formstabilität und lange Wege und damit gute Dichtigkeit gegen eindringendes Wasser erreicht.

Eine weitere Beschreibung der Erfindung erfolgt anhand von Ausführungsbeispielen, die in den Zeichnungsfiguren dargestellt sind.

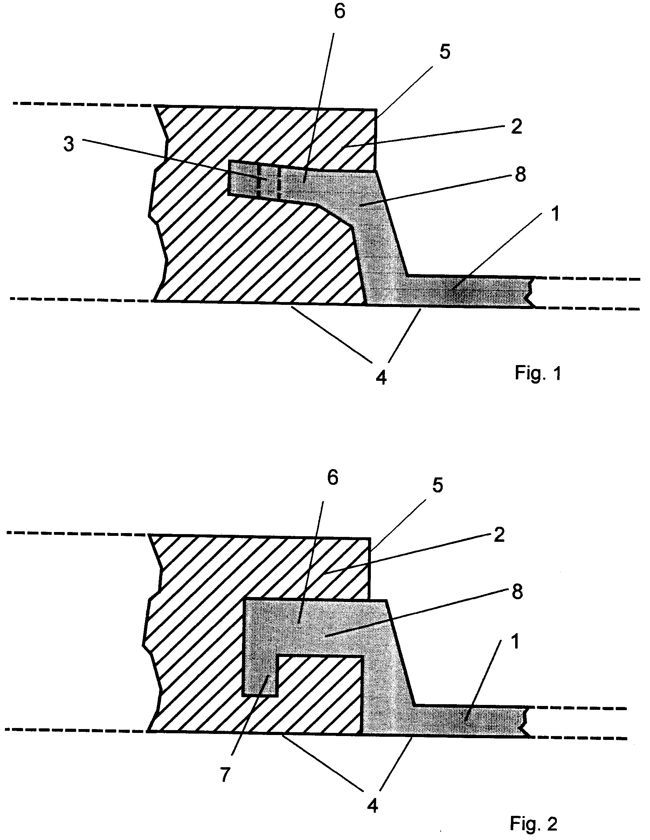

Es zeigen Fig.1 eine Anordnung mit einer ersten Randgestaltung eines in eine Gehäusewand eingesetzten folienartigen Kunststoffteils, und Fig. 2 eine zweite Variante der Randgestaltung.

Fig. 1 zeigt eine Gehäusewand 2 eines Kunststoffgehäuses, das eine Öffnung 5 mit eingesetztem folienartigen Kunststoffteil 1 aufweist. Das folienartige Kunststoffteil 1 kann beispielsweise eine Fresnellinsenanordnung sein. Das folienartige Kunststoffteil 1 ist 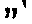 eingesetzt" durch Umspritzen mit Kunststoff, während der Herstellung des Kunststoffgehäuses mit Hilfe einer Spritzgußform, in die heißer Kunststoff eingefüllt wird. Aus Fig.1 ist ersichtlich, daß das Kunststoffteil 1 einen treppenförmig abgestuften Rand 6 aufweist. Die am Rand 6 umlaufende Stufe 8 kann im äußeren Randbereich zusätzlich Löcher 3 aufweisen, durch die Materialbrücken entstehen. Die Randgestaltung des Kunststoffteils 1 ermöglicht es, das Kunststoffteil 1 so einzusetzen, daß sich eine äußere Fläche 4 mit stufen- und wulstlosem Übergang zwischen der Gehäusewand 2 und dem Kunststoffteil 1 ergibt.

Fig. 2 zeigt eine zweite mögliche Gestaltung des Randes 6, wobei sich an die Stufe 8 eine weitere Abwinkelung 7 anschließt. Mit dieser Ausführung wird auch ohne Löcher 3 ein guter Formschluß erreicht.

Wenn als Kunststoffteil 1, eine zunächst flach hergestellte Linse in ein Gehäuse räumlich gekrümmt eingesetzt werden muß, kann vorteilhaft die in Fig. 1 gezeigte erste Variante der Randgestaltung verwendet werden. Der in Fig. 2 gezeigte besonders formstabile Rand könnte in einem solchen Anwendungsfall störend sein.

Wenn Linsen flach in ein Gehäuse einzusetzen sind, bietet eine Anordnung gemäß der Fig. 2 einen besseren Formschluß.

Mit beiden Ausführungsvarianten wird eine gute Wasserdichtigkeit erreicht, da lange Kriechwege für Wasser gegeben sind. Durch die Abstufung entlang des gesamten Linsenrandes wird auch eine hohe mechanische Stabilität gegen äußeren Druck, z. B. aufgrund von Tests gemäß Prüfnormen oder unvorhergesehenen Kollisionen erreicht.

Die technische Beherrschung des Umspritzens ist auch gegeben, da sich zum einen ein solcher umlaufend abgestufter Rand selbst genügend stabilisiert, so daß die Gefahr des einseitigen Anlegens an eine Spritzgießform nicht gegeben ist. Zum anderen ist auch das Umfließen selbst bei dünnen Wandungen, z. B. einer Gehäusewanddicke von etwa 3 mm durch Kunststoffe mit relativ hohem Fließindex kein Problem. Die formschlüssige Fläche ist besonders groß.

## Patentansprüche

1. Kunststoffgehäuse mit einer Gehäusewand (2), die wenigstens eine Öffnung (5) aufweist, in die ein folienartiges Kunststoffteil (1), insbesondere eine Fresnellinsenanordnung, mittels Kunststoff-Umspritzen seines Randes (6) eingesetzt ist, dadurch gekennzeichnet, daß
a) das Kunststoffteil (1) bündig mit der nach außen weisenden Seite der Gehäusewand (2) eingesetzt ist, also mit der äußeren Seite der Gehäusewand (2) eine stufen- und wulstlose Fläche (4) bildet, und
b) der Rand (6) des Kunststoffteils (1) eine umlaufende, zum Gehäuseinneren weisende, im Umspritz-Kunststoff liegende Stufe (8) aufweist, also treppenstufenförmig ausgeführt ist.

2. Kunststoffgehäuse nach Anspruch 1, dadurch gekennzeichnet, daß der gestufte Rand (6) in seinem äußeren Bereich eine zusätzliche Abwinkelung (7) aufweist.

3. Kunststoffgehäuse nach Anspruch 1 oder 2, dadurch gekennzeichnet, daß der gestufte Rand (6) in seinem äußeren Bereich Löcher (3) hat, die mit dem Kunststoff der Umspritzung ausgefüllt sind.
